# EUROPEAN PATENT APPLICATION

(11) **EP 4 583 502 A1**
(43) Date of publication of application: **09.07.2025**
(21) Application number: 24150257.4
(22) Date of filing: 03.01.2024
(51) Int. Cl.: H04M 3/56

(54) **A METHOD FOR MANAGING MULTIMEDIA IN A VIRTUAL CONFERENCING SYSTEM, A RELATED SYSTEM, A RELATED MULTIMEDIA MANAGEMENT MODULE, AND A RELATED VIRTUAL CONFERENCING SERVER**

(71) Applicant: Connexounds BV, 3390 Tielt-Winge (BE)
(72) Inventor: HASSANI, Amin, 3390 Tielt-Winge (BE); BERNARDI, Giuliano, 3010 Leuven (BE)
(74) Representative: Gevers Patents

(57) **Abstract**

The present invention relates to a method, related virtual conferencing system, a related multimedia management module, a related client device and a related virtual conferencing server for managing sound in a virtual conferencing system comprising a virtual conference server and a plurality of client devices coupled to said virtual conference server said plurality of client devices comprising a first subset of co-located client devices and a second subset of remote client devices, said method comprising the steps of detecting, by an Active client detection means, at least one active client device from/of said subset of co-located client devices based on detected input signals of a user of said client devices; and controlling, by an Acquisition control means, an acquisition of an outgoing audio signal exclusively from each of said at least one active co-located device for forwarding said outgoing audio signal to remote devices of said second subset of remote devices and Controlling, by a playback control means, synchronization of said received incoming audio signal from each of said at least one active device for playback at co-located client devices of said first subset of co-located client devices. The present invention, further manages the video signals, and further controls the transcription of the audio signals, following the step of detecting, by an Active client detection means, at least one active client device from said subset of co-located client devices.

## Description

### TECHNICAL FIELD

The present invention relates to a method for managing multimedia in a virtual conferencing system, a related system, a related multimedia management module, a related client device and a related virtual conferencing server.

### BACKGROUND ART

A virtual conference can be defined as a live communication between several users (participants) linked by a virtual conference service (VCS) using a telecommunication network. The VCS supports virtual conference by providing audio, possibly and optionally accompanied by video and/or data services. Therefore, the term virtual conference is taken to include videoconferences (audio and video), audio conferences (only audio), web conferences and other forms of mixed media conferences.

Virtual conferences may be held involving multiple participants located inside the same acoustic enclosure further referred to as co-located participants, such as the same conference room or the same classroom, with other participants located at a remote location. In this case, when the participants like to join the call with their devices, they experience audio issues that arises from the fact that generally only one actual device with audio can participate the virtual conference from each shared locale (referred to as audio-enabled device). In such scenarios, this sole audio-enabled device will inevitably be further from some participants in the room than others. This results in varied intelligibility of participants based solely on how near or far the participants are from the single active microphone. Further, the experience of those participants in the shared locale itself is also less than ideal since those furthest from the device are often left struggling to hear the single in-room device's speaker output that generates the voice of the remote participants.

Room acoustic imperfections in the local room (such as background noise and adverse room acoustics) can worsen the problem as it might worsen the already mentioned problem of low intelligibility for participants sitting further away from the active microphone.

Additionally, the fact that multiple participants use the same device provides misleading information to the remote participants of the teleconference, as it might not always be straightforward to understand which participants are the actual speakers (either in the case the video does not show all the participants, or in the case of providing only a single room-view video of the locale, or in the case of an audio-only teleconference). This strongly reduces the users' communication quality of experience (QoE) and leaves the remote participants with poor sense of engagement in the virtual conference.

Considering that nowadays most virtual conference participants have a personal communication device (such as a laptop, a tablet or a smartphone) and they bring along such devices to the conference room, it would potentially enhance both the video and audio experiences if the co-located participants could simply use their personal communications devices to participate in the virtual conference, or to use their personal communications devices as a companion to a conference room system (a dedicated conferencing device) to further enhance the video and audio experiences and hence the meeting engagement..

Such an approach could lead to an increased participation of the virtual conference participants, a simpler way to share content (e.g. data, document, etc) between participants, and to an overall enhanced user experience and efficiency in virtual conferences.

However, this approach is disadvantageous in that, since the participants speech is picked by several different microphones and since each participant in the same room will also have a speaker playing the sound of the teleconference, the number of potential feedback loops will increase dramatically with each active microphone in the room, damaging the conference quality, in both the local and the remote room, making the echo cancellation and enhancement strategies built-in a telecommunication system very difficult to perform.

Such a system is in particular disadvantageous in that the introduction of echo due to the plurality of feedback-loops reduces the users' communication quality of experience (QoE) and leaves the remote participants with poor sense of engagement in the virtual conference.

### DISCLOSURE OF THE INVENTION

It is an aim of the present invention to provide a method for managing multimedia signals in a virtual conferencing system, related devices and a related system of the above known type method but wherein the aforementioned shortcoming or drawbacks of the known solutions are alleviated or overcome.

Accordingly, embodiments of the present invention relate to a method for managing multimedia signals in a virtual conferencing system comprising a virtual conference server and a plurality of client devices coupled to said virtual conference server, said plurality of client devices comprising a first subset of co-located client devices (100₁,100₂, 100₃) and a second subset of remote devices (300₁, 300₂), said method comprising the steps of:
- detecting, by an Active client detection means, at least one active client device amongst said first subset of co-located client devices, based on a measured input signal associated to a user of each said co-located client device and/or other distinctive attributes extracted from at least one sensor coupled to each said co-located client device; and
- controlling, by an Acquisition control means, an acquisition of an outgoing audio signal exclusively from each of said at least one active co-located device for forwarding said outgoing audio signal to remote devices of said second subset of remote devices for playback at these remote devices of said second subset of remote devices.

**Another relevant embodiment** of the present invention relates to the step of controlling, by a playback control means, synchronization of a received incoming audio signal from at least one remote client device of said second subset of remote client devices, **at, at least one active co-located client device for playback at co-located client devices** of said first subset of co-located client devices.

**Another relevant embodiment** of the present invention relates to a method for Mixing, by a Multimedia Routing means (MRM) (which can be executed at said virtual conference server and/or at said client devices), the outgoing audio signal-(105) of each of said at least one active co-located device of said first subset of co-located client devices (100₁,100₂, 100₃), to generate an incoming audio signal (306) for playback at, at least one client device of said second subset of remote client devices (300₁, 300₂).

**Still another relevant embodiment** of the present invention relates to a method for Mixing, by a Multimedia Routing means (MRM) (which can be executed at said virtual conference server and/or at said client devices), the outgoing audio signal (305)-of at least one remote client device of said second subset of remote client devices (300₁, 300₂), to generate an incoming audio signal (106) for playback at each co-located client device of said first subset of co-located client devices (100₁,100₂, 100₃).

**A further relevant embodiment of the present invention** relates to a method for Mixing, by said Multimedia Routing means (MRM), said outgoing audio signal-(105) of each of said at least one active co-located device of said first subset of co-located client devices (100₁,100₂, 100₃) **and** said outgoing audio signal (305)-of at least one remote client device of said second subset of remote client devices (300₁, 300₂), to generate an incoming audio signal (106) for playback at, at least one co-located client devices of said first subset of co-located client devices (100₁,100₂, 100₃).

**Still another relevant embodiment of the present invention** relates to a method for managing multimedia signals in a virtual conferencing system according to claim 1-5, wherein said method further comprises before said step of detecting, by an Active client detection means (108), at least one active client device the step of:
- detecting, by a Co-located Client Detection Means (CCDM), at least one co-located client device from said plurality of client devices based on acoustic signals and/or a discovery query exchanged between client devices of said plurality of client devices.

**Still a further relevant embodiment of the present invention** relates to a method for managing multimedia signals in a virtual conferencing system according to claim 6, wherein said method further comprises the steps of:
- detecting, by a multimedia management module (MMM), at least one dedicated conferencing device (200) further coupled to said virtual conference server (10) and co-located with said co-located client devices (100₁,100₂, 100₃); and
- forwarding, the multimedia signals of said at least one dedicated conferencing device (200) to said Multimedia Routing means (MRM); and
- generating, by said Multimedia Routing means (MRM), from said multimedia signals of said at least one dedicated conferencing device (200) **and** said multimedia signals received from said at least one active co-located device of said first subset of co-located client devices (100₁,100₂, 100₃), an incoming multimedia signal for playback at said second subset of remote client devices (300₁, 300₂).

**Another relevant embodiment of the present invention** relates to a method for managing multimedia signals in a virtual conferencing system according to claim 7, wherein said method further comprises the steps of:
- Controlling, by said playback control means (PCM), playback of a received incoming audio signal (106) from at least one remote client device of said second subset of remote client devices (300₁, 300₂), exclusively at said at least one dedicated conferencing device (200) co-located with said co-located client devices (100₁,100₂, 100₃).

**A further relevant embodiment of the present invention** relates to a method for managing multimedia signals in a virtual conferencing system according to claim 1, wherein said method further comprises before said step of forwarding of said **outgoing audio signal,** the steps of:
- Processing, by said Acquisition control means (ACM), said **outgoing audio signal (105₁, 105₃)** from each of said at least one active client device to obtain an enhanced outgoing audio signal from each of said at least one active client device.

**Still a further relevant embodiment** relates to a method for managing multimedia signals in a virtual conferencing system according to claim 2, wherein said method further comprises before said step of synchronization of said **incoming audio signal,** the steps of:
- Processing, by said playback control means (PCM), said **incoming audio signal (106)** received from at least one remote client device of said second subset of remote client devices (300₁, 300₂), to obtain an enhanced incoming audio signal.

**Another relevant embodiment of the present invention** relates to a method for managing multimedia signals in a virtual conferencing system according to claim 1, 3 and 4, wherein said method further comprises the steps of:
- transcribing, by an Audio Transcription Means (ATM), said **outgoing audio signal (105₁, 105₃)** received from each of said at least one active client device of said first subset of co-located client devices (100₁,100₂, 100₃) and/or said **outgoing audio signal (305)**-of at least one remote client device of said second subset of remote client devices (300₁, 300₂), to obtain a transcription associated to an audio signal of said client devices coupled to said virtual conferencing server (10).

**Indeed this objective** is achieved by first detecting at least one active client device from said subset of co-located client devices based on a measured input signal associated to a user of said each said co-located client device and/or other distinctive attributes extracted from at least one sensor coupled to each said co-located client device; and subsequently controlling the acquisition of an outgoing audio signal, **exclusively** from each of said at least one active device co-located device for forwarding of said outgoing audio signal to remote devices of said second subset of remote devices (300₁, 300₂), for playback at these remote devices of said second subset of remote devices as in this manner by detecting the at least one active device from said subset of co-located client devices based on a measured input signal associated to a user of said each said co-located client device and/or other distinctive attributes extracted from at least one sensor coupled to each said co-located client device and subsequently exclusively acquiring an outgoing audio signal, from each of said at least one active device of said subset of co-located client devices, **the number of potential feedback loops have become limited, thereby significantly improving the listening quality of sound in the virtual conference at said second subset of remote client devices**

**Additionally, or alternatively the** outgoing audio signal can be forwarded to at least one co-located device of said first subset of co-located devices for playback at such co-located device of said first subset of client devices.

**Such distinctive attributes** used for detecting active client devices **could** be the **GPS** coordinates of said subset of co-located client devices, overall brightness of the room or environment in which the said subset of co-located client devices are located, overall background noise level of the environment in which the said subset of co-located client devices are located, BLUETOOTH range, identifier of the GSM cell address to which the said subset of co-located client devices are connected.

Such at least one sensor coupled to each said co-located client device used by the active client detection means may comprise acoustic sensors such as microphones, and/or image sensors such as cameras, and/or optical and light sensors, and/or ultrasonic/optic proximity sensors, motion sensors, location and position sensors such as GPS or Gyroscopes/environmental sensors, such as temperature, humidity, pressure sensors and/or any combination thereof.

Furthermore, by subsequently controlling the synchronization of said received incoming audio signal originating from at least one remote client device of said second subset of remote client devices, for playback at, at least one co-located client devices of said first subset of co-located client devices, the received incoming audio signal is ensured to only contain the audio from said second subset of remote client devices.

By playing back such received incoming audio signal at said co-located client devices of said first subset of co-located client devices in a synchronized manner, not only **the number of potential feedback loops are reduced, but also the listening quality of sound in the virtual conference at said** first subset of co-located client devices is significantly improved.

Furthermore, the selection of the same active co-located device in Claim 1 that forwards said outgoing audio signal for playback at remote devices of said second subset of remote devices (300₁, 300₂), to also receive the incoming audio signal (106), is crucial to ensure 1) robustness of the conferencing system 2) network efficiency and routing of the conferencing system, and 3) exploiting the incoming signal at a certain device would not typically include a contribution of an outgoing audio signal of the same device.

The synchronization of said received incoming audio signal from each of said at least one remote client devices for playback at co-located client devices of said first subset of co-located client devices (100₁, 100₂) needs to compensate the different communication delays in the specific network paths including the different communication delays in the VCS (between the VCS servers and different VCS clients), especially when some of the clients use a wired connection and some others use a wireless connection, different latencies in the sound hardware of different client devices, different latencies in the processing (algorithmic delays, e.g., caused by encoding, encryption, compression)and/or Longer/less stable P2P delays due to the constraints in the local network (e.g., when the signals need to travel further outside the local network due to the lack of possibility for direct connections between the devices within the local network they are connected to)

Therefore, a crucial step of this synchronization is that co-located client devices (100₁,100₂, 100₃) playback the same signal received from the remote client devices (300₁, 300₂).

Another further relevant embodiment of the present invention relates to the steps of Mixing, by a Multimedia Routing means (MRM) (which can be executed at said virtual conference server and/or at said client devices), the outgoing audio signal-(105) of each of said at least one active co-located device of said first subset of co-located client devices (100₁, 100₂, 100₃), to generate an incoming audio signal (106) for playback at, at least one client device of said second subset of remote client devices (300₁, 300₂)
In this way only outgoing audio signal (105) of **active clients** are forwarded to MRM at the servers for playback at the remote location, thereby saving network bandwidth and server computation burden. Furthermore, the mixing ensures that only a single mixed audio signal is sent to the remote client devices (300₁, 300₂), which is advantageous as the number of client devices increase since no matter how many client devices are coupled to the virtual conferencing server, each remote client devices (300₁, 300₂) receives a single mixed incoming audio signal from MRM.

Still another further relevant embodiment of the present invention relates to the method further comprising the steps of mixing, by a Multimedia Routing means (which can be executed at said virtual conference server and/or at said client devices), the outgoing audio signal (305)-of at least one remote client device of said second subset of remote client devices (300₁, 300₂), to generate a received incoming audio signal (106) for playback at each co-located client device of said first subset of co-located client devices (100₁,100₂, 100₃).

In this manner, solely a single mixed audio signal is generated for playback at each co-located client device of said first subset of co-located client devices (100₁, 100₂, 100₃) whereafter the PCM only needs to synchronize said single mixed audio signal.

Still another further relevant embodiment of the present invention relates to the method further comprising the steps of mixing, by said Multimedia Routing means (MRM), said outgoing audio signal-(105) of each of said at least one active co-located device of said first subset of co-located client devices (100₁,100₂, 100₃) and said outgoing audio signal (305,)-of at least one remote client device of said second subset of remote client devices (300₁, 300₂), to generate a received incoming audio signal (106) for playback at co-located client devices of said first subset of co-located client devices (100₁,100₂, 100₃).

This embodiment is advantageous in that it allows co-located users to hear each other easier via the client devices in rooms without an audio reinforcement or public address (PA) system. It is important to guarantee the low-latency requirements and to control potential acoustic feedback loops.

Moreover, a user of a far placed client device within the same room from each of said at least one active device the speech of the active client is not sufficiently loud for being heard (while still co-located with the active client/participant within the same enclosure) can better hear other users within the same room, without creating feedback problems.

A further relevant embodiment of the present invention relates to the detecting, by a Co-located Client Detection Means (CCDM), before said step of detecting, by an Active client detection means (108), at least one active client, at least one co-located client device from said plurality of client devices based on acoustic signal and/or on a discovery query exchanged between said client devices of said plurality of client devices.

Such a Co-located Client Detection Means (CCDM) is configured to detect participants co-location, i.e., the status of sharing the same acoustical space, that may be based on, but are not limited to, the exchange of discovery queries such as zero-configuration networking, or using Bluetooth technology or alike for proximity detection, or be based on
- Ultrasonic pulses/codes acoustic signal emitting by one/or more of the application programmable devices APDs or client device sharing the same location.
- Bluetooth signals or any other discovery services exchanged between different client devices (also between a dedicated conferencing device when relevant) sharing the same location to detect proximity.
- The combination maybe used to detect both the co-location and the acoustic coupling (for clustering)
   - Information obtained by each VCS client device APDs using 1) Wi-Fi SSID, 2) cellular towers, or 3) a Global Positioning System (GPS).

Alternatively, such co-location status may be detected based on user assignment performed by the respective users based on the user interface, e.g., joining the same virtual room identified by a unique attribute of a virtual conferencing session such as a unique ID and exploiting a discovery server providing each application programmable devices APDs or client device with the IP addresses of the other application programmable devices APDs or client devices.

In this manner by means of such information on the co-location of client devices the ACM and PCM of the present multimedia management system are enabled to prevent acoustic issues to arise and to control the multimedia signals in an appropriate way.

A further relevant embodiment of the present invention relates to the
- detecting, by a multimedia management module, of at least one dedicated conferencing device 200 that is further coupled to the virtual conferencing server and co-located with said co-located client devices (100₁,100₂, 100₃); and subsequently forwarding, the multimedia signals of said at least one dedicated conferencing device to said Multimedia Routing means (MRM); and generate, by said Multimedia Routing means (MRM), from said multimedia signals of said at least one dedicated conferencing device (200) **and** said multimedia signals received from said at least one active co-located device of said first subset of co-located client devices (100₁,100₂, 100₃), an incoming multimedia signal for playback at said second subset of remote client devices (300₁, 300₂).

**In this manner in case** there exists an additional dedicated conferencing device in the room they work in synergy with the co-located client devices to mutually enhance the effectiveness of the virtual conferencing session, by providing the most suitable multimedia signals to maximize meeting and collaboration engagement. Furthermore, this embodiment is advantageous in that it removes the need for complex 360 conferencing cameras, and it improve "inclusivity" and "engagement" in virtual conferencing systems in a way to ensure every user of the virtual conferencing can clearly see who of the other users speak and further follow the users taking turns as the conference progresses.

Such a dedicated conferencing device 200 that is co-located with said co-located client devices (100₁,100₂, 100s)coupled with at least one said co-located client devices (100₁,100₂, 100₃) being a standalone conferencing device such as room controllers (e.g., Lenovo ThinkSmart solutions Microsoft Teams room controllers, Zoom room Controllers), BYOM wireless conferencing devices (such as Barco Clickshare Conference, Crestron AirMedia, Biamp Modena, Wolfvision Cynap), connected to integrated AV peripherals (Logitech Rally, Polycom Poly Studio, Jabra Panacast, Biamp Parle).

A further relevant embodiment of the present invention relates to the Controlling, by said playback control means PCM, playback of a received incoming audio signal from at least one remote client device of said second subset of remote client devices (300₁, 300₂), exclusively at at least one dedicated conferencing device co-located with said co-located client devices (100₁,100₂, 100₃) and/or at least one conferencing peripheral coupled to at least one said co-located client devices (100₁,100₂, 100₃).

In this way the present system prevents that the users experience a perceptual inconvenience since the playback in sync at the larger and more powerful speakers of said dedicated conferencing device (200) along with the loudspeakers of the client devices may not always lead to the best performance. For instance, the latter may in smaller meeting spaces lead to communication fatigue because as the users may be experiencing sound coming from various directions.

A further relevant embodiment of the present invention relates to the processing, by said Acquisition control means (ACM), said **outgoing audio signal** from each of said at least one active client device to obtain an enhanced outgoing audio signal from each of said at least one active client device, for forwarding said enhanced outgoing audio signal to remote devices of said second subset of remote devices (300₁, 300₂).

The embodiment is advantageous in that each active client device typically need to first enhance its microphone signal before generating an outgoing audio signal suitable for forwarding to remote devices (300₁, 300₂). For instance, the contribution of the far-end audio (audio from the remote devices (300,, 300₂)) should first be removed from the microphone signals, via an acoustic echo cancellation technique. Another example is to suppress the background noise contaminating the user speech, via a background noise suppression technique. Furthermore, room acoustic imperfections in the local room (such as reverberation) may reduce the speech intelligibility, and hence a pre-processing is crucial before generating an outgoing audio signal suitable for forwarding to remote devices (300₁, 300₂).

It is to be noted that to obtain an enhanced outgoing audio signal of an active device, the microphones signals of other non-active devices may also be used, e.g., for speech enhancement using beamforming techniques.

A further relevant embodiment of the present invention relates to the step of processing, before said step of synchronization and playback of said **incoming audio signal,** by said playback control means (PCM), of said **incoming audio signal** received from at least one remote client device of said second subset of remote client devices (300₁, 300₂), to obtain an enhanced incoming audio signal.

Embodiments of the present invention are advantageous in that in case the audio of the incoming audio signal from the remote clients are not satisfactory (e.g., due to background noise within the remote locations, or adverse effects added by audio communication such as packet drops and audible losses). In such cases, said step of processing can enhance the audio quality before synchronizing for playback.
still a further relevant embodiment of the present invention relates to the transcribing, by an Audio Transcription Means (ATM), wherein said **outgoing audio signal (105₁, 105₃)** received from each of said at least one active client device of said first subset of co-located client devices (100₁,100₂, 100₃) and/or said **outgoing audio signal (305)**-of at least one remote client device of said second subset of remote client devices (300₁, 300₂), to obtain a transcription associated to an audio signal of said client devices coupled to said virtual conferencing server (10).

In this manner the audio signals such as speech can be transcribed for generating a summary report of a meeting set up via the system according to the present invention, while it allows associating the transcription acquired from outgoing audio signals to the actual users generating the speech.

### BRIEF DESCRIPTION OF THE DRAWINGS:

The invention will be further elucidated by means of the following description and the appended figures.
**Figure 1 (FIG 1****)** represents a **multimedia management system** for managing multimedia signals in a virtual conferencing system comprising a virtual conference server and a plurality of client devices; and
**Figure 2 (FIG 2****)** represents the functional elements of a **multimedia management module** incorporated in a client device and in a virtual conference server according to an embodiment of the present invention.
**Figure 3 (FIG 3****)** represents an embodiment according to the present invention illustrating a **multimedia routing means (MRM)** incorporated in a client device and adjusted to further mix the outgoing audio signals and incoming audio signals for playback at co-located client devices.
**Figure 4 (FIG 4****)** represents the functional elements of a **Co-located Client Detection Means (CCDM)** incorporated in a multimedia management module.
**Figure 5-A (FIG 5-A****)** represents an embodiment according to the present invention presenting a **multimedia management system** for managing multimedia signals in a virtual conferencing system comprising a virtual conference server, a plurality of client devices and a **dedicated conferencing device.**
**Figure 5-B (FIG 5-B****)** represents how the functional elements of a multimedia routing means (MRM) adjusted to further accommodate for a dedicated conferencing device.
**Figure 6 (FIG 6****)** represents the functional elements of an **Audio Transcription Means (ATM)** incorporated in a multimedia management module.

### MODES FOR CARRYING OUT THE INVENTION:

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

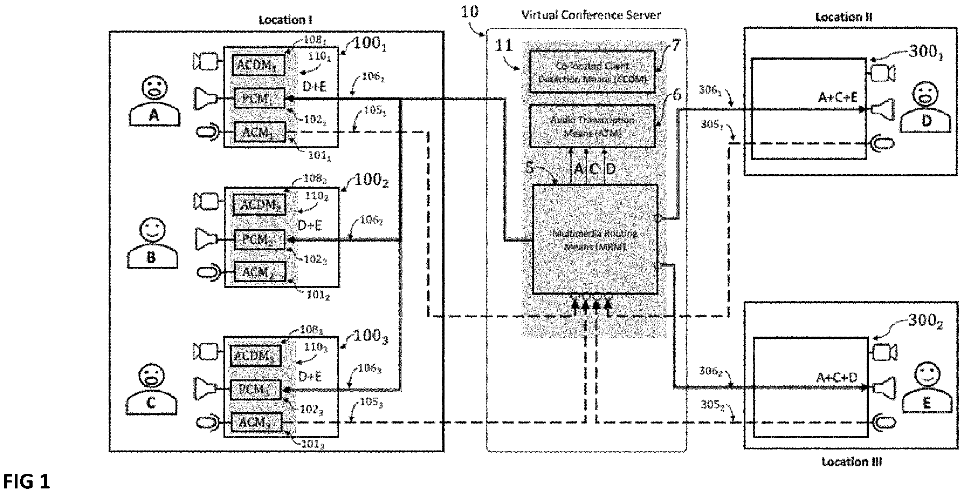

In the following paragraphs, referring to the drawing in **FIG 1****,** an implementation of the system for managing multimedia signals in a virtual conferencing system according to an embodiment of the present invention is described. In a further paragraph, all connections between mentioned elements are defined. Subsequently all relevant functional means of the system for extracting data associated with a view of an application as presented in FIG.1 are described followed by a description of all interconnections.

In the succeeding paragraph the actual execution of the method for managing sound in a virtual conferencing system according to an embodiment of the present invention is described.

At first, a virtual conference can be defined as a live communication between several users linked by a virtual conference service VCS using a telecommunication network. The VCS supports virtual conference by providing audio, optionally accompanied by video and/or data services such as text chat, screen sharing, transcription, and digital whiteboard. Therefore, the term virtual conference is taken to include videoconferences (audio and video), audio conferences (only audio), web conferences and other forms of mixed media conferences.

Virtual conferences may be held involving multiple participants located inside the same acoustic enclosure further referred to as co-located client devices 100₁, 100₂, 100₃ such as the same conference room or the same classroom, with other participants located at a remote location further referred to as remote client devices 300₁, 300₂. In this case, when the co-located participants client devices 100₁, 100₂, 100₃ like to join the call with their devices, they experience audio issues that arises primarily because 1) typical acoustic echo cancellation methods fail to operate in the presence of variable-latency audio playback signals at different co-located devices, and 2) the playback of co-located microphones via co-located loudspeakers lead to acoustic feedback and instability of the system. Such issues therefore force that only one actual device with audio participate the virtual conference from each shared locale. Such devices joining with audio will be referred to as audio-enabled devices. In such scenarios, this sole audio-enabled client device will inevitably be further from some participants in the room than others. This results in varied intelligibility of participants based solely on how near or far the participants are from the single active microphone. Further, the experience of those participants in the shared locale itself is also less than ideal since those furthest from the sole audio-enabled client device are often left struggling to hear the single in-room device's loudspeaker output that generates the voice of the remote participants.

A multimedia management system as shown in **FIG 1****,** according to embodiments of the present invention is provided to manage multimedia signals to prevent the above-mentioned issues arising in a virtual conferencing system comprises a virtual conference server 10 and a plurality of client devices (and optionally co-located dedicated conferencing devices), each coupled to said virtual conference server, said plurality of client devices comprising a first subset of co-located client devices 100₁, 100₂, 100₃ and a second subset of remote client devices 300₁, 300₂. It is noted that such remote client devices 300₁, 300₂ may be co-located with other client devices and/or dedicated conferencing devices.

A first essential element of the virtual conferencing service VCS is a virtual conferencing server (10) which computing device may be implemented at a local or distributed server system for supporting a virtual conferencing service for bringing premises-based video, audio, and web communication together to meet the collaboration needs of all coupled virtual conferencing devices.

Basic functionalities of the virtual conferencing server of a virtual conferencing service VCS for instance may comprise functionality to: 1) initiate the meeting session (on demand of the client users) 1) connect the participant to the correct video meeting 2) arrange the multimedia (audio and video and text) routing to the different connected participants (examples are Selective Forwarding Unit (SFU), MCU (Multipoint Control Unit) or a Traversal Using Relays around NAT (TURN) server) 3) take care of authentication of the connected users 4) connecting with the other virtual conferencing servers in a distributed server systems
Such virtual conference server 10 may allow various types of conferencing devices to run a specific version of a virtual conferencing application for supporting such virtual conference service VCS and forward multimedia to other clients coupled to said virtual conference server 10.

A second essential element of the system is a client device 100₁, 100₂, 100₃, 300₁, 300₂ of the videoconferencing system. Such client device may be a user computing device suitable for video conferencing typically comprising Application non-programmable devices (ANPDs) or audio/video peripherals such as but are not limited to, headphones, teleconferencing microphones and loudspeakers, (wired/wireless) (wearable) microphones and speakers having a display, camera, microphone and/or a keyboard supporting the virtual conference.

In the explanation of the present invention, these ANPDs are considered as potential external peripherals coupled to at least one of the APDs defined in the following paragraph. Hence the ANPDs will not be changing the dynamics of the present multimedia management system (including the embodiments).

Such a client device may be an Application-programmable device (APD), being a programmable storage device that can have program instructions stored thereon for causing a programmable control device to perform the instructions of the present invention. Accordingly, instructions for implementing embodiments of the present invention can be implemented in digital electronic circuitry, computer hardware, computer firmware, computer software, or any combination thereof. Instructions for implementing embodiments of the present invention can be implemented in a computer program product tangibly embodied in a machine-readable storage device for execution by a programmable processor so that the programmable processor executing program instructions can perform functions of the present disclosure. The instructions for implementing embodiments of the of the present invention can be implemented advantageously in one or more computer programs that are executable on a programmable system including at least one programmable processor coupled to receive data and instructions from, and to transmit data and instructions to, a data storage system, at least one input device, and at least one output device. Storage devices suitable for tangibly embodying computer program instructions and data include all forms of nonvolatile memory, including by way of example semiconductor memory devices, such as EPROM, EEPROM, and flash memory 65 devices; magnetic disks such as internal hard disks and removable disks; magneto-optical disks; and CD-ROM disks. Any of the foregoing can be supplemented by, or incorporated in, ASICs (application-specific integrated circuits). Examples of such client device include, but are not limited to, are laptops, tablets, smartphones, hearing assistive devices, smart watches, smart speakers, smart TVs, smart PA systems.

In addition to said client devices 100₁, 100₂, 100₃, 300₁, 300₂ , another type of device refer to as a dedicated virtual conferencing device (200) may be coupled to said virtual conference server 10, where such dedicated virtual conferencing device (200) includes, but not limited to, an application-programmable room controller coupled to a conferencing AV peripheral for use with video conferencing services such as Microsoft Teams, Zoom, Google Meet, Cisco Webex, interactive displays, wireless conferencing devices for so-called bring your own meeting (BYOM) collaboration spaces.

Each such client device 100₁, 100₂, 100₃, 300₁, 300₂, and dedicated conferencing device 200 is enabled to run a virtual conferencing application for supporting such virtual conference service VCS.

Each of these such client devices may be coupled to the virtual conferencing server 10 over a communication network such as, but are not limited to, mobile communication networks such as 2G, 3G, 4G or 5G cellular networks, (wireless) LAN networks, using various communications infrastructure, such as Ethernet, Wi-Fi, a personal area network (PAN), a wireless PAN, Bluetooth, near-field communication (NFC), the like and Fixed communications networks. Further examples of such communications networks may be home networks, corporate networks, school networks, public networks (shops, airports, stations, etc.)

The current virtual conferencing system according to embodiments of the present invention comprises a first subset of co-located client devices (100₁,100₂,100₃), being client devices that are located inside the same acoustic enclosure referred to as co-located participants 100₁, 100₂, 100₃, for instance within the same conference room or the same classroom.

Although such virtual conferencing system typically comprises a large amount of client devices, and possibly multiple locations containing co-located client devices, in this description for reasons of simplicity only a limited number of client devices is described at only one location.

Each of the client devices 100₁, 100₂, 100₃300₁, 300₂ may comprise a Virtual conferencing client module (not shown for reasons of simplicity) comprising virtual client functionality for supporting the virtual conference service VCS, by means of a client application, e.g. as a softphone or a VCS client software that can also connect to a specific VCS platform and stream video (e.g., Zoom, Microsoft Teams, Google Meet, CISCO Webex). The co-located client devices 100₁, 100₂, 100₃ according to the present invention further may comprise:
- a multimedia management module (110₁, 110₂, 110₃) hosted by the client devices, or a multimedia management module (11) hosted by the virtual conferencing server (10), comprising an Active client detection means (ACDM) (108₁, 108₂, 108₃), or their equivalent within the multimedia management module (11), that is configured to detect at least one active client device from/of said first subset of co-located client devices based on measured input signal associated to a user of said each said co-located client device and/or other distinctive attributes extracted from at least one sensor coupled to each said co-located client device.

These sensors for extracting these distinctive attributes may be aacoustic sensors such as microphones/image sensors such as cameras /Optical and light sensors/ (ultrasonic/optic) proximity sensors/motion sensors/location and position sensors such as GPS or Gyroscopes/environmental sensors, such as temperature, humidity, pressure sensors, connected (WiFi) network identifier and/or any combination thereof.

The co-located client devices 100₁, 100₂, 100₃ according to the present invention further may additionally or alternatively comprise:
- an Acquisition control means (ACM) 101₁, 101₂, 101₃ that is configured to control an acquisition of an outgoing audio signal (105₁, 105₂, 105₃) exclusively from each of said at least one active co-located device for forwarding said outgoing audio signal to remote devices of said second subset of remote devices (300₁, 300₂). and/or
- a playback control means (PCM) 102₁, 102₂, 102₃ that is configured to control the synchronization of the received incoming audio signal (106₁, 106₂, 106₃) from at least one remote client device of said second subset of remote client devices (300₁, 300₂), at at least one active device for playback at co-located client devices of said first subset of co-located client devices (100₁, 100₂, 100₃). It is to be noted that although only co-located client device (100₁, 100₂, 100₃) is disclosed, further client devices (for instance remote client devices 300₁, 300₂) have a similar functional structure.

- A multimedia routing means (MRM) that is configured to mix the audio signals for playback at co-located client device (100₁, 100₂, 100₃), or to mix the audio signals from each of said at least one active co-located device for playback at remote client devices (300₁, 300₂).
- An audio transcription means (ATM) that is configured to transcribe the audio from outgoing audio signals 105₁, 105₂, 105₃ of active co-located client devices, in addition from audio signals of the remote client devices 300₁, 300₂.
- A multimedia management module (MMM) that is configured to detect at least one co-located client device from said plurality of client devices based on acoustic signals and/or a discovery query exchanged between client devices of said plurality of client devices.

Said virtual conferencing server 10 may implement all or part of the functionality of a multimedia management module 11 for use in the virtual conferencing system according to the present invention comprising a virtual conference server.
- The virtual conference server 10 may further comprise a multimedia management module 11 for managing multimedia signals in a virtual conferencing system where this multimedia management module may comprise:
- an Active client detection means (ACDM) that is configured to detect at least one active client device from/of said first subset of co-located client devices based on measured input signal associated to a user of said each said co-located client device and/or other distinctive attributes extracted from at least one sensor coupled to each said co-located client device and/or
- -an Acquisition control means (ACM) that is configured to control an acquisition of an outgoing audio signal exclusively from each of said at least one active co-located device for forwarding said outgoing audio signal to remote devices of said second subset of remote devices (300₁, 300₂) and/or
- a playback control means (PCM) that is configured to control the synchronization of a received incoming audio signal from at least one remote client device of said second subset of remote client devices (300₁, 300₂), at, at least one active device, for playback at co-located client devices of said first subset of co-located client devices (100₁, 100₂).
- A multimedia routing means (MRM) that is configured to mix the audio signals from remote client devices (300₁, 300₂) for playback at co-located client device (100₁, 100₂, 100₃), or to mix the outgoing audio signals from each of said at least one active co-located device for playback at remote client devices (300₁, 300₂).
- An audio transcription means (ATM) that is configured to transcribe the audio from outgoing audio signals of active client devices.
- A multimedia management module that is configured to detect at least one co-located client device from said plurality of client devices based on acoustic signals and/or a discovery query exchanged between client devices of said plurality of client devices.

Each of the multimedia management module 110₁, 110₂, 110_{3 of} such co-located client devices (100₁, 100₂, 100₃) and a multimedia management module 11 of a virtual conferencing server 10 may be coupled by means of a peer-to peer coupling further referred to as P2P-communications network. Such P2P communication links may also be realized as part of a Local Area Network (LAN) using various communications infrastructure, such as Ethernet, Wi-Fi, a personal area network (PAN), a wireless PAN, Bluetooth, near-field communication (NFC), and the like. Such P2P network may also be realized through a mobile communications network (LTE, 3G, 4G, 5G). The goal is to allow such multimedia management modules communicate with each other via local networks that has a lower latency compared to the links connecting the client devices to said virtual conferencing server 10.

Such P2P communication network may also be implemented by connecting devices directly via a direct link (e.g., WiFi direct) or alternatively via a relay server device. Furthermore, P2P communication may be performed over the already used virtual conferencing links from the clients to the servers.

It is to be noted that the functionality of such a multimedia management module 110₁ 110₂,110₃, 11 may be distributed over the each of the co-located client devices, the virtual conferencing server 10 and/or a further coupled network-connected conferencing element such as a dedicated conferencing device.

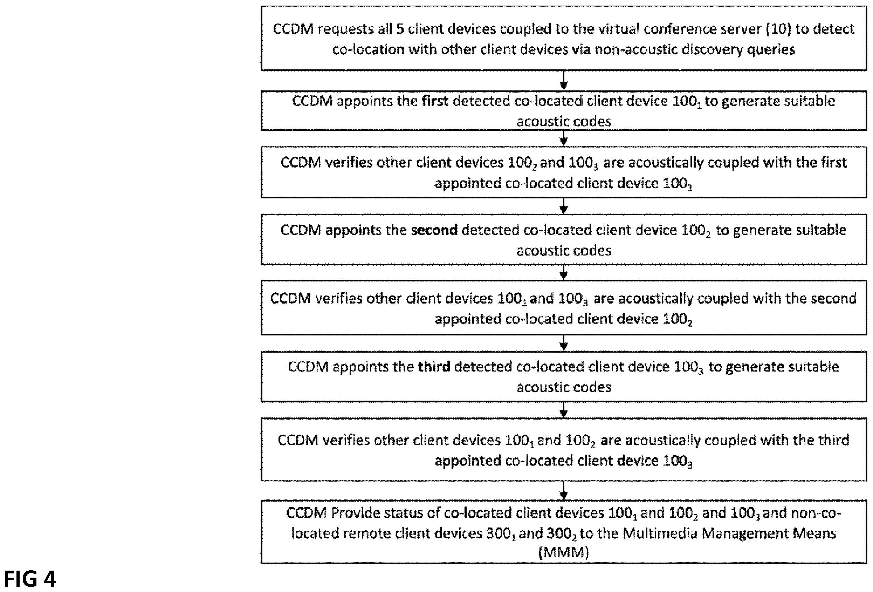

It is to be noted that in order to explain an embodiment of the present invention it is assumed that the co-location status may be determined by the **Co-located Client Detection Means (CCDM)** - **FIG 4****,** or manually assigned by the users of respective client devices via the user interface, e.g. joining the same virtual room identified by a unique ID and exploiting a discovery server providing each client device or APD with the IP addresses of the other client devices.

In order to explain an embodiment of the present invention it is further assumed that users A, B and C are sharing the same location and are associated with the co-located client device 100₁, 100₂, 100₃, while users D and E are joining from separate locations and associated with the remote client devices 300₁, 300₂, respectively.

It is then assumed that the users A and C of client device 100, and 100₃ start speaking while assumed that the user B of client device 100₂ stays silent.

An active client detection means ACDM₁ at the client device 100, detects that client device 100, (associated with user A) of co-located client devices is active. Concurrently, an active client detection means ACDM₃ at the client device 100₃ detects that client device 100₃ (associated with user C) of co-located client devices is active.

Such detection of activity is performed based on measured input signal associated to a user of said each said co-located client device and/or other distinctive attributes extracted from at least one sensor coupled to each said co-located client device, for instance:
- **based on audio signals from microphones:** a relatively more clear or louder speech at of an active user A who is located closer to the client device 100, than client device 100₂ is detected at the microphone of client device 100₁. However, this does not mean that at the microphone of the further co-located devices 100₂ no speech of the associated active user A is detected (since the two devices client devices 100₁ and 100₂ are still indeed co-located and near to each other), but only means that the device 100₂ detects the speech of the user associated with client device 100₁ in a relatively less clear/weaker manner than that of 100₁. This difference in the relative speech quality can, for instance, be used by the active client detection means ACDM₁ to determine who of the co-located users are active clients.
- **based on image signals from cameras:** ACDM₁ detects the active client A based on tracking the lip movements of corresponding video signals extracted from the camera of the client device 100₁.

In order for the ACDM₁ and ACDM₃ to detect active clients in a more accurate way, co-located client devices 100₁, 100₂, 100₃ may optionally exchange data with each other (for example over a P2P network that can offer a lower latency than the network connecting the client devices to the virtual conferencing server 10).

The detected active status of users A, C of co-located client devices 100₁ , 100₃ determined by ACDM₁ and ACDM₃ is then shared across the co-located devices and the multimedia management module (for instance via the P2P network coupling each co-located devices). Alternatively, the active client detection means ACDM may be located at any co-located device, or any dedicated conferencing device, but also at the multimedia management module 11 on the virtual conference server 10.

Subsequently, it is assumed that the acquisition control means ACM is configured to control an acquisition of an outgoing audio signal exclusively from each of the active co-located client device. Therefore, the acquisition control means ACM₁ of the active co-located client device 100₁, and the acquisition control means ACM₃ of the active co-located client device 100₃, first optionally process (for example to reduce acoustic echo, suppress background noise, reduce room effects and enhance speech quality) outgoing audio signal 105₁, and 105s, to obtain a processed (with enhanced audio quality) outgoing audio signal and then forward said processed outgoing audio signals 105₁, and 105₃ from each of said at least one active client device 100₁, and 100₃ to the multimedia routing means (5) for playback of said processed signal at each client device of said second subset of remote client devices (300₁, 300₂).

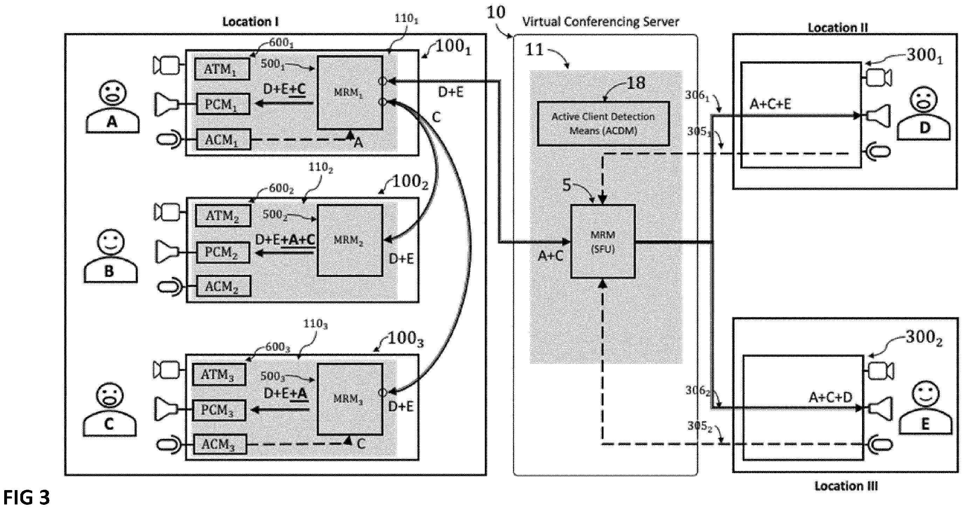

Alternatively, the multimedia routing means (MRM) may be incorporated within the co-located client devices, in which case the step of mixing is carried out on one of active co-located client devices to generate a single outgoing audio signal. An example of this embodiment is illustrated in **FIG 3****.**

Once each_active co-located device 100₁ and 100₃ send their outgoing audio signal 105₁,105₃-to the Multimedia Routing means (5) at said virtual conference server (10), two different approaches can be followed:
**Selective forwarding for mixing at the remote client devices:** Forwarding, by the Multimedia Routing means (5) (which can be executed at said virtual conference server and/or at said client devices), the outgoing audio signals 105₁,105s-of each of said at least one active co-located device of said first subset of co-located client devices (100₁,100₂, 100₃), to at least one client device of said second subset of remote client devices (300₁, 300₂). As such, the step of mixing may be carried out at the remote client devices (300₁, 300₂) to generate an incoming audio signal for playback. This is similar to what a selective forwarding unit (SFU) would perform in a WebRTC architecture.
**mixing and sending a single stream to the remote client devices:** Mixing, by the Multimedia Routing means (5) (which can be executed at said virtual conference server and/or at said client devices), the outgoing audio signal 105₁,105₃-of each of said at least one active co-located device of said first subset of co-located client devices (100₁,100₂, 100₃), to generate an incoming audio signal (306) for playback at, at least one client device of said second subset of remote client devices (300₁, 300₂). This is similar to what a multipoint control unit (MCU) would perform in a WebRTC architecture.

Similarly, said Multimedia Routing means 5 at said virtual conference server 10 may mix (or forward for mixing at the co-located client devices (100₁,100₂, 100₃)) the outgoing audio signal (305)-of at least one remote client device of said second subset of remote client devices (300₁, 300₂), to generate an incoming audio signal (106) for playback at each co-located client device of said first subset of co-located client devices (100₁,100₂, 100₃).

Furthermore,_the playback control means PCM₁, PCM₂ and PCM₃ that is configured to control the synchronization of said received incoming audio signal 106₁, 106₂ and 106₃ from at least one remote client device of said second subset of remote client devices (300₁, 300₂), at, at least one active device, for playback at co-located client devices of said first subset of co-located client devices (100₁, 100₂). By synchronizing the received incoming audio signal from from at least one remote client device of said second subset of remote client devices (300₁, 300₂), at at least one active device, for playback at co-located client devices of said first subset of co-located client devices (100₁, 100₂), the different communication delays are compensated so that the playback at the various co-located client devices is performed synchronously. As a way of implementation in this embodiment, the synchronized signal of the received incoming audio signal from the at least one remote client device of said second subset of remote client devices (300₁, 300₂), ₁ for playback at the co-located client devices of said first subset of co-located client devices (100₁, 100₂) is communicated to the respective playback control means of each co-located client devices of said first subset of co-located client devices over the D2D network coupling each co-located device.

The existing delays are the consequence of the specific network paths such as D2D, different communication delays in the VCS (between the VCS servers and different VCS clients), especially when some of the clients use a wired connection and some others use a wireless connection, different latencies in the sound hardware of different APDs, different latencies in the processing (algorithmic delays, e.g., caused by encoding, encryption, compression)and/or Longer/less stable P2P delays due to the constraints in the local network (e.g., when the D2D signals need to travel further outside the local network due to the lack of possibility for direct connections between the devices within the local network they are connected to)

It is further to be noted that although each of the mentioned means being the Active client detection means ACDM, and/or the Acquisition control means (ACM) and/or the playback control means (PCM), in this embodiment of the present invention are disclosed to be implemented in the co-located client device 100₁, alternatively each of these functional means may be implemented in a distributed manner and be jointly incorporated in both of the co-located client device 100₁, 100₂, or be incorporated in the multimedia management module 11 of the server device 10.

A further relevant embodiment of the present invention relates to the detecting, by a **Co-located Client Detection Means (CCDM),** at least one co-located client devices from said plurality of client devices based on a discovery queries exchanged between said client devices of said plurality of client devices.

Such a multimedia management module MMM may also be configured to detect client devices co-location, i.e. the status of sharing the same acoustical space, that may be based on, but are not limited to, the exchange of:
- a discovery signal comprising Ultrasonic pulses/codes (as determined by the multimedia management system MMS, as opposed to be determined by the VCS servers) non-audible audio signal emitting by at least one client device sharing the same location.
- a discovery signal comprising Bluetooth signals or any other discovery services exchanged between different client devices sharing the same location to detect proximity.
- The combination is used to detect both the co-location and the acoustic coupling (for clustering)
   - Information obtained by each VCS client device wherein a discovery signal is based on 1) Wi-Fi hotspots, 2) cellular towers, or 3) a Global Positioning System (GPS)with a geographical location.

A more detailed description will be disclosed later in a separate embodiment (**FIG 4**).

Alternatively, such co-location status may be detected based on user assignment performed by the respective users based on the user interface, e.g. joining the same virtual room identified by a unique ID and exploiting a discovery server providing each APD with the IP addresses of the other APDs.

A further relevant embodiment of the present invention relates to detecting an acoustic coupling between each of said co-located devices based on a generated acoustic signal such as an ultrasonic signal at a first device; and subsequently clustering said co-located client devices in a subset of said co-located client devices based on said detecting an acoustic coupling between said co-located devices at reception of such generated acoustic signal at corresponding acoustic sensor.

At least one device may generate an acoustic (e.g. ultrasonic) signal, and then the acoustic coupling is found at those devices that the signal is detected in the measured input signals (=in the microphone measurements). Client devices being located within a range that such client device is detectable (e.g. audible) by a second device is acoustically coupled to said second client device.

A further relevant embodiment of the present invention relates to additionally performing synchronization and playback of said outgoing audio signal (105) from each of said at least one active device in addition to said incoming audio signal (106) from the at least one remote client devices, at each co-located client devices of a second subset of said co-located client devices being far placed from said at least one active client device.

Embodiments of the present invention are advantageous in that a user of a far placed client device within the same room from each of said at least one active device the speech of the active client is not sufficiently loud for being heard (while still co-located with the active client/participant within the same enclosure, but in a different second subset of co-located devices) can better hear other users within the same room, without creating feedback problems.

This is useful for playing back audio streams of active speaker in the room, e.g., in situations without a public address or sound reinforcement systems. To avoid acoustic feedback, a mix-minus method may be used to prevent the active client device (and the devices in proximity playback the audio of the active device). Proximity may be determined by use of acoustic coupling level detection methods.

**Still another relevant embodiment of the present invention relates** to in case of a plurality of active co-located client device that the processing, by said Acquisition control means (ACM) of said outgoing audio signal from each of said at least one active client device to obtain a processed outgoing audio signal from each of said at least one active client device and transmitting, by said acquisition control means (ACM), said processed outgoing audio signal from each of said at least one active client device to said server device (10) for playback of said processed signal at each client device of said second subset of remote client devices (300₁, 300₂).

In a further embodiment of the present invention the step of processing said outgoing audio signal from each of said at least one active client device comprises the step of audio enhancement using techniques such as acoustic echo cancellation, noise suppression, automatic gain control, said outgoing audio signal from each of said at least one active client device and enhancing audio quality of said mixed outgoing audio signal from each of said at least one active client device

The processing of such outgoing audio signal in case of a plurality of active devices may include:
- at the co-located client devices (100₁, 100₂) (i.e. in the local room **(****FIG 1**)), performing both the step of mixing the signals acquired from each active co-located client device as well as the step of enhancing the audio quality of the resulting mixed signal. The resulting enhanced mixed outgoing audio signal is then transmitted to the virtual conference server 10 for playback at each client device of said second subset of remote client devices (300₁, 300₂); or alternatively;
- at the co-located client devices (100₁, 100₂) (i.e. in the local room **(****FIG 1**)), only the step of enhancing the audio quality of the outgoing audio signal of each individual active device is performed. The resulting enhanced outgoing audio signals are then transmitted separately from each individual active device to the virtual conference server 10, wherein the step of mixing is performed so that the resulting signal is sent for playback at each client device of said second subset of remote client devices (300₁, 300₂);

**Still another alternative embodiment of the present invention relates to** a method for managing sound in a virtual conferencing system wherein said method further comprises the steps of processing, e.g. enhancing audio quality, by means of the playback control means (PCM) of the **incoming audio signal** from at least one remote client device of said second subset of remote client devices (300₁, 300₂), at at least one active device for playback at co-located client devices of said first subset of co-located client devices (100₁, 100₂).

Therefore, this embodiment provides an option to improve the audio quality before playback. For instance, if a remote person joins from the virtual conference from a noisy location. The Multimedia management module MMM may first process this incoming signal (in this example, reduce noise) and subsequently playback the processed audio signal (=enhanced) in sync at all the co-located client devices.

**Still another alternative embodiment of the present invention relates to method for** managing multimedia signals in a virtual conferencing system wherein said method further comprises the steps of
- detecting, by a multimedia management module (MMM), at least one dedicated conferencing device (200) further coupled to said virtual conference server (10) and co-located with said co-located client devices (100₁,100₂, 100₃); and
- forwarding, the multimedia signals of said at least one dedicated conferencing device (200) to said Multimedia Routing means (MRM); and
- generate, by said Multimedia Routing means (MRM), from said multimedia signals of said at least one dedicated conferencing device (200) **and** said multimedia signals received from said at least one active co-located device of said first subset of co-located client devices (100₁,100₂, 100₃), an incoming multimedia signal for playback at said second subset of remote client devices (300₁, 300₂).

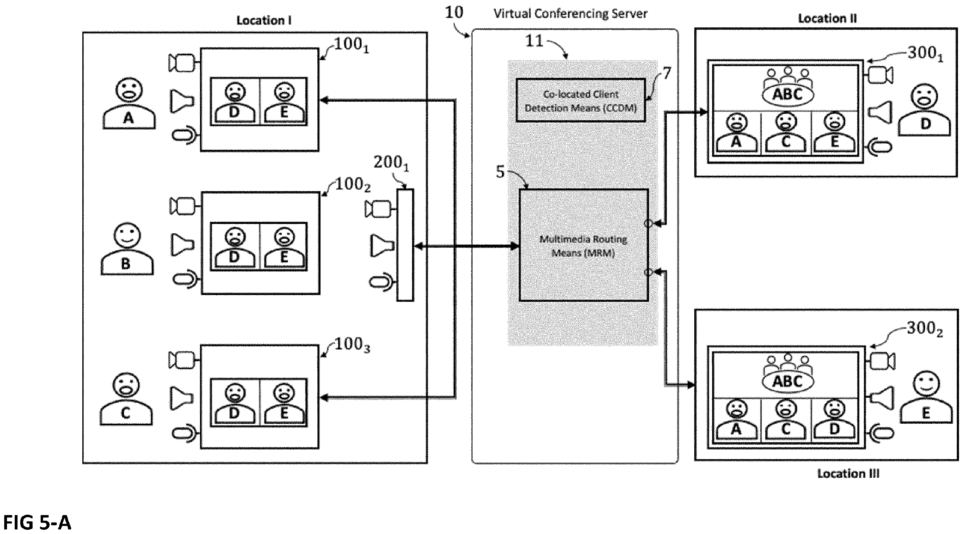

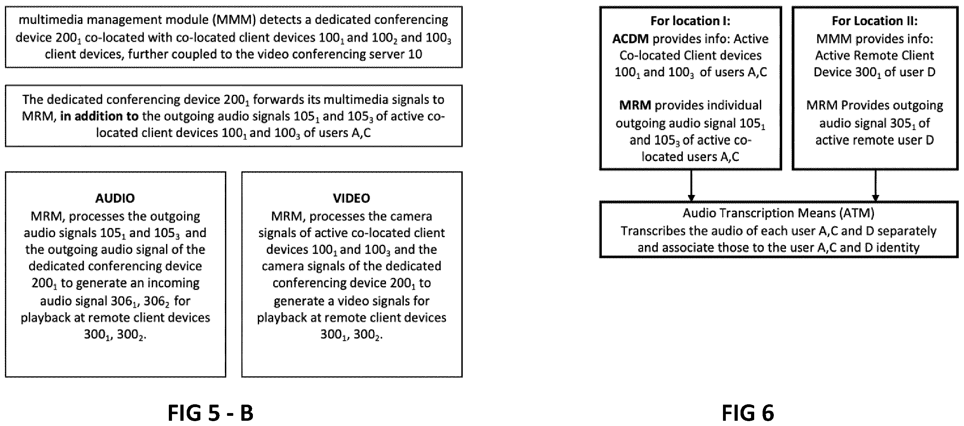

This will be explained and disclosed in detail by means of **FIG 5-A** **and** **FIG 5-B** in the succeeding paragraphs.

**Still another alternative embodiment of the present invention relates to method for** managing multimedia signals in a virtual conferencing system wherein said method further comprises the steps of
- transcribing, by an Audio Transcription Means (ATM), said **outgoing audio signal (105₁, 105₃)** received from each of said at least one active client device of said first subset of co-located client devices (100₁,100₂, 100₃) and/or said **outgoing audio signal (305)**-of at least one remote client device of said second subset of remote client devices (300₁, 300₂), to obtain a transcription associated to an audio signal of said client devices coupled to said virtual conferencing server (10).
This will be explained and disclosed in detail by means of **FIG 1** and **FIG 6** in the succeeding paragraphs.

**FIG 1** represents a general case of a virtual conference using the multimedia management system (MMS) comprising 3 co-located users A,B and C with their corresponding client devices 100₁, 100₂ and 100₃ in the local room (location I), and 2 remote users D and E with their corresponding client devices 300₁ and 300₂ located in 2 different remote rooms (location II and location III). The Multimedia Management Module (MMM) might have different modes of operation, relying on:
1. the Multimedia management module 110₁, 110₂, 110₃ hosted on the client devices 100₁, 100₂ and 100₃, and/or
2. the Multimedia management module hosted on a dedicated conferencing device 200, and/or
3. the Multimedia management module 11 hosted on the Virtual Conferencing Server 10
For instance, in the case represented in **FIG 1****,** some functionalities of the Multimedia management module is hosted on the client devices 100₁, 100₂ and 100₃ (functionalities corresponding to PCM, ACM, ACDM), and some other functionalities are hosted on the Virtual Conferencing Server 10 (functionalities corresponding to Multimedia Routing Means (MRM) and Audio Transcription Means (ATM)).

In the present application, the term *"signal'* can be used to refer to as multimedia streams (such as audio or video, in whole or in time-fragments) and/or signalling parameters. The signals may be exchanged either:
- Between a given client device and a server of the virtual conferencing system using, for instance, the internet or any suitable packet-switched network.
- Between a given client device and a dedicated conferencing device using, for instance, Bluetooth, Wi-Fi signals, or any suitable packet-switched network.
- Between a given co-located client device and another co-located client device, using low-latency local connections such as local Wireless networks or WiFi-Direct.

Signals may be transmitted/received at different transmission rates. For instance, the signals containing parameters (e.g, to share the status of active client devices) may be exchanged at a lower rate when compared to multimedia streams.

Client devices suitable for use in a virtual conferencing system, typically include the following multimedia peripherals to enable the capturing and/or producing multimedia signals (as depicted in **FIG 1**):
- One or more microphones
- One or more loudspeakers
- One or more cameras

It is to be noted that such multimedia peripherals may be embedded inside the Client devices (for instance internal built-in microphones, loudspeakers, cameras of a personal laptop), or may be connected to the Client devices as an external multimedia peripheral via for instance USB or Bluetooth connections. Such an external multimedia peripheral may include a conferencing bar, a conferencing speakerphone, a conferencing desk phone, a conferencing camera).

The main elements of the Multimedia management module 110₁ within a client device 100₁ may include:
- The ACDM₁ (108₁), which is configured to detect whether the client device 100₁ is an active client device, i.e., if its user A speaks. The ACDM₁ (108₁) may perform the detection task by relying:
   ∘ solely on acoustic signals captured by the microphones connected of the client device 100₁ (for instance by detecting if the loudness level corresponding to user A surpasses a certain threshold)
   ∘ jointly on acoustic signals captured by the microphones connected of the client device 100₁, and by the microphones (or features extracted, such as a normalized power) connected of the other client device 100₂and 100₃
   ∘ jointly on acoustic signals captured by the microphones connected of the client device 100₁, and the video signals captured by the cameras connected of the client device 100₁ (for instance to detect lip movements of user A)
- The MRM₁(500₁), which might do one or a combination of the following tasks:
   ∘ Transmitting/Receiving multimedia signals exchanged between the client device 100₁ and the virtual conferencing server 10
   ∘ Mixing received multimedia signals received from the virtual conferencing server 10 before playback
   ∘ Transmitting/Receiving multimedia signals exchanged between the client device 100₁ and other co-located client devices 100₂ and 100₃ over the low-latency P2P local networks.
   ∘ Transmitting/Receiving multimedia signals to/from ACM₁ 101₁ / PCM₁ 102₁ of the client device 100₁
- The ATM₁ 600₁, which is configured to transcribe the audio signal corresponding to user A of client device 100₁, when the client device 100₁ is detected active by the ACDM₁ 108₁.
- The ACM₁ 101₁, which might do a combination of the following tasks:
   ∘ Capturing multimedia signals from the multimedia input peripherals (e.g., microphones and cameras) connected to client device 100₁
   ∘ Processing to enhance audio quality of the captured multimedia signals to generate outgoing audio signal 105₁
   ∘ Controlling for forwarding via a Multimedia Routing means (MRM) the outgoing audio signal 105₁ to remote devices (300₁, 300₂)
   ∘ Controlling for forwarding via a Multimedia Routing means (MRM) the outgoing audio signal 105₁ to other relevant co-located client devices through low-latency P2P local connections.
   ∘ Processing to enhance video quality of the captured multimedia signals
   ∘ Controlling for forwarding via a Multimedia Routing means (MRM) the outgoing video/image signal to remote devices (300₁, 300₂)
- The PCM₁ 102₁, which might do any or a combination of the following tasks:
   ∘ Receiving multimedia playback signals for playback at the client device 100₁
   ∘ Controlling the playback of incoming audio signal 106₁
   ∘ Processing to enhance audio quality of the received incoming audio signal 106₁to generate an enhanced incoming audio signal 106₁
   ∘ Performing time synchronization between the clocks of different co-located devices and compensate for the relative communication delays to obtain a time-synchronized data between the co-located client devices
   ∘ Playback quality-enhanced and time-synchronized incoming audio signal 106₁ from the multimedia output peripherals connected to client device 100₁

It is to be noted that, a multimedia management module incorporated within a Dedicated conferencing device200, may have similar functionalities as described above for the multimedia management module 110₁ incorporated within a client device 100₁,

Furthermore, it is to be noted that, that a multimedia management module 11 within a virtual conferencing server 10, may comprise similar main elements and functionalities as described above for the multimedia management module 110₁,

**In the following embodiment, it is disclosed how the present multimedia management system MMS of this invention operates to manage the multimedia signals with reference to** **FIG 1****.**

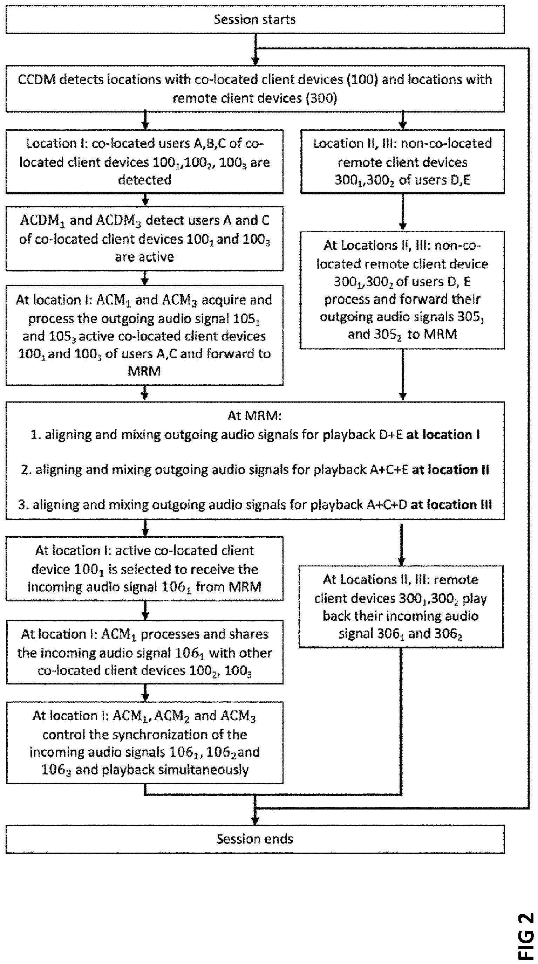

**FIG 2** represents the functional elements of **the present** multimedia management module incorporated in a client device and in a virtual conference server according to an embodiment of the present invention.

For the description of this embodiment, it is assumed that:
1. there exists only one location with co-located devices, referred to as location I
2. 3 co-located users A, B and C join the virtual conference sessions via 3 co-located client devices 100₁, 100₂ and 100₃
3. 1 remote user D joins from location II via a client device 300₁,
4. 1 remote user E joins from location III via a client device 300₂.
5. The co-located users A and B from location I, and the remote user D are active, i.e., speaking at the time instance the embodiment is being illustrated and disclosed. Users B and E are assumed to be silent.
It is noted that although for the description of this embodiment it is assumed that the remote client devices 300₁ and 300₂ are non-co-located, this assumption is made solely to make the explanation easier as otherwise such remote client devices could indeed also be co-located with other client devices, in which case a similar procedure described for location I would apply to location II and III.

For the description of this embodiment, it is further assumed that:
1. The multimedia management modules 110₁, 110₂ and 110₃ hosted by the co-located client devices 100₁, 100₂ and 100₃ include the functionalities of ACDM, PCM and ACM
2. The multimedia management modules 11 hosted by the virtual conferencing server 10 includes the functionalities of MRM, CCDM and ATM
3. The remote client devices 300₁ and 300₂ operate normally, i.e., they do not host a multimedia management module.

As illustrated in **FIG 2****,** first the Co-located Client Detection Means (CCDM) detects how the client devices of the virtual conferencing are arranged. A detailed process for this step will be described later (functionalities described in **FIG 4**)**.** Consequently, CCDM detects location I with co-located client devices 100₁, 100₂ and 100₃, and locations II and III with non-co-located remote client devices 300₁ and 300₂. Furthermore, CCDM verifies that the co-located client devices 100₁, 100₂ and 100₃ are further acoustically coupled (this concept will be explained in the following paragraphs).

Co-located client devices 100₁, 100₂ and 100₃ are configured to execute the functionalities of the ACDM*ₙ*, PCM*ₙ* and ACM*ₙ* (n=1,2,3).

As the conference progresses, ACDM₁ and ACDM₃ detect users A and C of co-located client devices 100₁ and 100₃ are active.

Subsequently, ACM₁ and ACM₃ acquire and process the outgoing audio signals 105, and 105₃ of active users A and C of active co-located client devices 100₁ and 100₃ and forward said outgoing audio signals 105, and 105₃ to the multimedia routing means (MRM) 5 located at the conferencing server 10. ACM₂ of non-active client device 100₂ does not forward an outgoing audio signal to the MRM 5.

**An advantage of the present multimedia management system (MMS) is that the number of active communication channels between the co-located client devices and the multimedia routing means (MRM) located at the conferencing server 10 are limited to the number of active co-located devices. Consequently, this saves a significant amount of bandwidth and computation overhead across the virtual conferencing system, especially as the number of co-located users increase.**

Meanwhile at Location II and III: non-co-located remote client device 300₁, 300₂ of users D, E (may first process and then) forward their outgoing audio signals 305₁ and 305₂ to the MRM 5.

Once the audio signals are received for mixing by the multimedia routing means (MRM) 5 of the conferencing server 10, MRM carries out the following:
1. mixing the outgoing audio signals 305₁ and 305₂ for playback the speech of users D and E **at location** I
2. mixing the outgoing audio signals 105₁ and 105₃ and the outgoing audio signals 305₂ for playback the speech of users A, C and E **at location II.** It is to be noted that since the user E is not active, to further save bandwidth, the MMS may control that the outgoing audio signal 305₂ may also not sent to the MRM (until indeed user E becomes active).
3. mixing the outgoing audio signals 105₁ and 105₃ and the outgoing audio signals 305₁ for playback the speech of users A, C and D **at location III.**

Afterwards, MRM sends the incoming audio signal 106 mixed for location I, to **at least one of the active co-located client devices** currently sending out the outgoing audio signal to MRM. Since in the case of this embodiment, two active co-located client devices are detected, it is assumed that one active co-located client device is selected as a receiving proxy. Such a selection may consider factors such as the computational power and communication capabilities of active co-located client devices. For instance, laptops and workstations are more preferred than mobile devices (since they likely have more CPU power and are often power-connected). Furthermore, if one active device is connected via a (LAN) cable to the network, that device is more preferred. In this embodiment, it is assumed that the active co-located client device 100₁ is selected to receive the incoming audio signal 106₁ from the MRM.

Once the the active co-located client device 100₁ receives the incoming audio signal 106₁, ACM₁ processes and shares the incoming audio signal 106₁ with other co-located client devices 100₂, 100₃.

Such connection is preferably carried out by means of a low-latency network connections, such a local area LAN networks, Bluetooth, WiFi-Direct, or a 5G network.

Afterwards, ACM₁,ACM₂ and ACM₃ control the synchronization of the incoming audio signals 106₁, 106₂and 106₃ and playback simultaneously. Such synchronization may be achieved by 1) estimating round-trip time (RTT) for each signal exchange to determine the latency between co-located client devices 2) compensating for such RTTs and achieve a clock synchronization.

**In the following embodiment, it is disclosed and described how the present multimedia management system MMS of this invention** is adjusted to additionally perform synchronization and playback of outgoing audio signals 105₁ and 105₃ from the active co-located devices 100₁ and 100₃ **in addition to** said incoming audio signal 106₁ received from remote client devices 300₁ and 300₂, at co-located client devices being far placed from said active co-located devices 100₁ and 100₃.

This embodiment is illustrated in **FIG 3**

For the description of this embodiment, it is further assumed in the illustration of **FIG 3** that:
1. the active co-located client device 100₁ is selected to receive the incoming audio signal 106₁ (containing the outgoing audio signals of remote client devices 300₁ and 300₂) from the MRM
2. The multimedia management modules 110₁, 110₂ and 110₃ hosted by the co-located client devices 100₁, 100₂ and 100₃ include the functionalities of ATM, PCM and ACM and MRM
3. The multimedia management modules 11 hosted by the virtual conferencing server 10 includes the functionalities of ACDM, CCDM and MRM

The following steps are carried out:
1. The MRM₁ of the active co-located client device 100₁ receives the incoming audio signal 106₁(D+E) from the virtual conferencing server 10 (for instance from a selective forwarding unit (SFU))
2. The MRM₁ of the active co-located client device 100₁further receives the outgoing audio signal 106₃ of user C
3. The MRM₁ forwards to MRM₂ a mix of (D+E+A+C) and to MRM₃ a mix of (D+E+A), over a low-latency network such as a local (wireless) LAN network

PCM₁, PCM₂ and PCM₃ perform synchronization and playback of the incoming audio signals received from_MRM₁, MRM₂ and MRM₃In order to reduce the occurrence of acoustic feedback, adaptive feedback cancellation or a mix-minus strategy may be adopted. In the mix-minus strategy, users would only playback in room via the client devices their device is not acoustically coupled to. Determining such acoustic coupling is disclosed in another embodiment of this invention and by means of Co-located Client Detection Means (CCDM).

**In the following embodiment, it is disclosed and described how the present multimedia management system MMS of the present invention operates to detect co-located and remote devices.**

The following steps are carried out by Co-located Client Detection Means (CCDM) - **FIG 4****:**
**1.** CCDM requests all 5 client devices coupled to the virtual conference server (10) to detect co-location with other client devices via non-acoustic discovery queries. **For instance, this may be carried out by requesting 5 client devices to broadcast and/or receive wireless signals, such as Bluetooth beacons or Wi-Fi service set identifiers (SSIDs).**
2. CCDM appoints the **first** detected co-located client device 100, to generate suitable acoustic codes. **For instance, this may include generating ultrasound signals and/or codes over acoustic channel in a periodic manner and may contain data transitions via ultrasound frequency carriers.**
**3.** CCDM verifies other client devices 100₂ and 100₃ are acoustically coupled with the first appointed co-located client device 100₁. **For instance, this may include decoding ultrasound signals and/or codes generated by the first device over acoustic channel on the microphones of the client devices 100₂ and 100₃.**
4. CCDM appoints the **second** detected co-located client device 100₂ to generate suitable acoustic codes
5. CCDM verifies other client devices 100₁ and 100₃ are acoustically coupled with the second appointed co-located client device 100₂
6. CCDM appoints the **third** detected co-located client device 100₃ to generate suitable acoustic codes
7. CCDM verifies other client devices 100₁ and 100₂ are acoustically coupled with the third appointed co-located client device 100₃
8. CCDM Provide the status of co-located client devices 100₁ and 100₂ and 100₃ ,and that they are all acoustically coupled with each other, and the status of non-co-located remote client devices 300, and 300₂ to the Multimedia Management Means (MMM)

In this embodiment, the co-located client devices 100₁ and 100₂ and 100₃ are further assumed to be all **acoustically coupled,** meaning that they are placed close enough that acoustic signals generated by the loudspeakers of one such co-located client device may be detected at the microphones of the other co-located devices. It is to be noted that such condition would not be the case, when co-located devices are placed relatively far from each other (for instance at inter-distances above 4 meters).

**In the following embodiment, it is disclosed and described how the present multimedia management system MMS of this invention operates to detect a dedicated conferencing device and adjust the flow of multimedia signals accordingly.**

The following steps are additionally carried out by present multimedia management system MMS for playback at remote client devices 300₁, 300₂ - **FIG 5-A** and **FIG 5-B****:**
1. multimedia management module (MMM) detects a dedicated conferencing device 200, co-located with co-located client devices 100₁ and 100₂ and 100₃ client devices, further coupled to the video conferencing server 10
2. The dedicated conferencing device 200, forwards its multimedia signals to MRM, **in addition to** the outgoing audio signals 105₁ and 105₃ of active co-located client devices 100₁ and 100₃ of users A,C
3. **For Audio playback at remote client devices 300₁, 300₂:** MRM, processes the outgoing audio signals 105, and 105₃ and the outgoing audio signal of the dedicated conferencing device 200, to generate an incoming audio signal 306₁, 306₂ for playback at remote client devices 300₁, 300₂. Said processing may include mixing the outgoing audio signals 105, and 105₃ of active co-located client devices 100₁ and 100₃ of users A,C with the outgoing audio signal of the dedicated conferencing device 200₁, or to select the channel that provides a better audio quality of users A,C (e.g, to select an audio signal that offers louder signals and/or less reverberant speech of users A,C).
4. **For video playback at remote client devices 300₁, 300₂:** MRM, processes the camera signals of active co-located client devices 100₁ and 100₃ and the camera signals of the dedicated conferencing device 200, to generate video signals for playback at remote client devices 300₁, 300₂.
   Said processing may include creating a video layout that combines and effectively present both the **"room view"** (for instance video from the front-of-the-room video bar, such as Logitech Rally or Jabra Panacast) and the **"active speaker view"** (camera video from the active co-located client devices 100₁ and 100₃ of users A,C). One example of this is illustrated in **FIG 5-A** and **FIG 5-B****.**
   This embodiment is advantageous in that it removes the need for complex 360 conferencing cameras, and it improve "inclusivity" and "engagement" in virtual conferencing systems in a way to ensure every user of the virtual conferencing can clearly see who of the other users speak and further follow the users taking turns as the conference progresses.

**In one mode of operation,** MRM sends the outgoing audio signals 305₁, 305₂ of remote client devices 300₁, 300₂ for playback at each co-located client device 100₁,100₂, 100₃, in addition for playback at the dedicated conferencing device 200₁.

In this mode, ACM₁, ACM₂ and ACM₃ of co-located client device 100₁,100₂, 100₃ together with the multimedia management system MMS ensure to compensate for delay differences so that the same audio signal (for instance the mixture of outgoing audio signals 305₁, 305₂) is played back synchronously between at least one co-located client device 100₁,100₂, 100₃ and the dedicated conferencing device 200₁.

This mode of operation is more advantageous in larger meeting spaces, to ensure that users who sit far apart from the dedicated conferencing device 200₁ can still clearly hear the remote participants.

**In another mode of operation,** MRM sends the outgoing audio signals 305₁, 305₂ of remote client devices 300₁, 300₂ for playback exclusively at the dedicated conferencing device 200₁ (and not anymore at any of the co-located client device 100₁,100₂, 100₃.

In this mode, the present multimedia management system (MMS) may temporality disengage ACM₁, ACM₂ and ACM₃ of co-located client device 100₁,100₂, 100₃.

This mode of operation is more advantageous in smaller meeting spaces, to ensure that co-located users experience the playback from a single point of dedicated conferencing device 200₁. This may reduce communication fatigue because of experiencing sound coming from various directions.

Examples of such dedicated conferencing device may include: Room controllers (e.g., Lenovo ThinkSmart solutions Microsoft Teams room controllers, Zoom room Controllers), BYOM wireless conferencing devices (such as Barco Clickshare Conference, Crestron AirMedia, Biamp Modena, Wolfvision Cynap), connected to integrated AV peripherals (Logitech Rally, Polycom Poly Studio, Jabra Panacast, Biamp Parle).

The present invention further comprises the steps of enhancing the outgoing audio signals (105₁, 105₃) from each of said at least one active client device, as well as processing of the incoming audio signals received from the remote client devices 300₁ and 300₂.

For instance, one necessary step is to perform an acoustic echo cancellation on the microphone signals. This can be done using various existing approaches referred to as acoustic echo cancellers (AEC) and line echo cancellers (LEC). Furthermore, suppressing the background noise may be carried out by existing methods such as single channel noise reduction (e.g., using spectral subtraction methods), or multi-channel methods (e.g., beamforming or a multi-channel Wiener Filter). It is to be noted that these processing steps may be crucial to guaranty an efficient two-way communication for sharing information back and forth between the users joining the virtual conferencing.

**In the following embodiment, it is disclosed and described how the present multimedia management system MMS of this invention operates to transcribe the audio signals.**

It is the advantage of the present invention to allow associating the transcription acquired from outgoing audio signals to the actual users generating such speech. This resolves a challenge of understanding "who said what" when transcribing the audio signals, e.g., to generate a meeting summary.

The way the Audio Transcription Means (ATM) 6 of the present invention works is disclosed as follows and illustrated in **FIG** 6 This involves the following extra steps:
1. ACDM₁ and ACDM₃ provide the active status of active co-located client devices 100₁ and 100₃
2. ACM₁ and ACM₃ provide the outgoing audio signals 105₁ and 105₃
3. An extra voice activity detector (VAD) provides the active status of remote client devices 300₁ and 300₂
4. The multimedia management system MMS provides the identity of the users (their login ID) of active co-located client devices 100₁ and 100₃, and those of the remote client devices 300₁ and 300₂
5. With separately accessing to all the individual active audio signals of users A, C and D, the Audio Transcription Means (ATM) transcribes the audio and clearly associate them to the users A, C and D generating the speech signals.

It is to be noted that, in this embodiment, the Audio Transcription Means (ATM) 6 is embedded in the multimedia management module MMM 11 of the virtual conferencing server 10. However, this Audio Transcription Means (ATM) may also be embedded within a client device, and/or a dedicated conferencing device.

A Client device for use in a virtual conferencing system according to the present invention may comprise a multimedia management module (MMM) according to claim 14.

A Dedicated conferencing device for use in a virtual conferencing system (1) according to the present invention may comprise a multimedia management module (MMM) according to claim 14.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

It is further contemplated that some of the steps discussed herein as software methods may be implemented within hardware, for example, as circuitry that cooperates with the processor to perform various method steps. Portions of the present invention may be implemented as a computer program product wherein computer instructions, when processed by a computer, adapt the operation of the computer such that the methods and/or techniques of the present invention are invoked or otherwise provided. Instructions for invoking the inventive methods may be stored in fixed or removable media, transmitted via a data stream in a broadcast or other signal bearing medium, and/or stored within a working memory within a computing device operating according to the instructions.

Although various embodiments which incorporate the teachings of the present invention have been shown and described in detail herein, those skilled in the art can readily devise many other varied embodiments that still incorporate these teachings. While the principles of the invention have been described above in connection with specific apparatus, it is to be clearly understood that this description is merely made by way of example and not as a limitation on the scope of the invention, as defined in the appended claims.

## Claims

1. A method for managing multimedia signals in a virtual conferencing system comprising a virtual conference server and a plurality of client devices coupled to said virtual conference server (10), said plurality of client devices comprising a first subset of co-located client devices (100₁,100₂, 100₃) and a second subset of remote client devices (300₁, 300₂), **CHARACTERIZED IN THAT** said method comprising the steps of:
- detecting, by an Active client detection means (108), at least one active client device amongst said first subset of co-located client devices based on a measured input signal associated to a user of said each said co-located client device and/or other distinctive attributes extracted from at least one sensor coupled to each said co-located client device; and
- controlling, by an Acquisition control means (ACM), an acquisition of an outgoing audio signal (105) **exclusively from each of said at least one active co-located device** for forwarding said outgoing audio signal to remote devices of said second subset of remote devices (300₁, 300₂).

2. A method for managing multimedia signals in a virtual conferencing system according to claim 1, wherein said method further comprises the steps of:
- Controlling, by a playback control means (PCM), synchronization of a received incoming audio signal (106) from at least one remote client device of said second subset of remote client devices (300₁, 300₂), **at, at least one active co-located client device for playback at co-located client devices** of said first subset of co-located client devices (100₁,100₂, 100₃).

3. A method for managing multimedia signals in a virtual conferencing system according to claim 1, wherein said method further comprises the steps of:
- Mixing, by a Multimedia Routing means (MRM), the outgoing audio signal-(105) of each of said at least one active co-located device of said first subset of co-located client devices (100₁,100₂, 100₃), to generate an incoming audio signal (306) for playback at, at least one client device of said second subset of remote client devices (300₁, 300₂).

4. A method for managing multimedia signals in a virtual conferencing system according to claim 2, wherein said method further comprises the steps of:
- Mixing, by a Multimedia Routing means (MRM), the outgoing audio signal (305)-of at least one remote client device of said second subset of remote client devices (300₁, 300₂), to generate an incoming audio signal (106) for playback at each co-located client device of said first subset of co-located client devices (100₁,100₂, 100₃).

5. A method for managing multimedia signals in a virtual conferencing system according to claim 3, wherein said method further comprises the steps of:
- Mixing, by said Multimedia Routing means (MRM), said outgoing audio signal-(105) of each of said at least one active co-located device of said first subset of co-located client devices (100₁,100₂, 100₃) **and** said outgoing audio signal (305)-of at least one remote client device of said second subset of remote client devices (300₁, 300₂), to generate an incoming audio signal (106) for playback at, at least one co-located client devices of said first subset of co-located client devices (100₁,100₂, 100₃).

6. A method for managing multimedia signals in a virtual conferencing system according to claim 1-5, wherein said method further comprises before said step of detecting, by an Active client detection means (108), at least one active client device the step of:
- detecting, by a Co-located Client Detection Means (CCDM), at least one co-located client device from said plurality of client devices based on acoustic signals and/or a discovery query exchanged between client devices of said plurality of client devices.

7. A method for managing multimedia signals in a virtual conferencing system according to claim 6, wherein said method further comprises the steps of:
- detecting, by a multimedia management module (MMM), at least one dedicated conferencing device (200) further coupled to said virtual conference server (10) and co-located with said co-located client devices (100₁,100₂, 100₃); and
- forwarding, the multimedia signals of said at least one dedicated conferencing device (200) to said Multimedia Routing means (MRM); and
- generate, by said Multimedia Routing means (MRM), from said multimedia signals of said at least one dedicated conferencing device (200) **and** said multimedia signals received from said at least one active co-located device of said first subset of co-located client devices (100₁,100₂, 100₃), an incoming multimedia signal (306₁, 306₂) for playback at said second subset of remote client devices (300₁, 300₂).

8. A method for managing multimedia signals in a virtual conferencing system according to claim 7, wherein said method further comprises the steps of:
- Controlling, by said playback control means (PCM), playback of a received incoming audio signal (106) from at least one remote client device of said second subset of remote client devices (300₁, 300₂), exclusively at said at least one dedicated conferencing device (200) co-located with said co-located client devices (100₁,100₂, 100₃).

9. A method for managing multimedia signals in a virtual conferencing system according to claim 1, wherein said method further comprises before said step of forwarding of said **outgoing audio signal,** the steps of:
- Processing, by said Acquisition control means (ACM), said **outgoing audio signal (105₁, 105₃)** from each of said at least one active client device to obtain an enhanced outgoing audio signal from each of said at least one active client device.

10. A method for managing multimedia signals in a virtual conferencing system according to claim 2, wherein said method further comprises before said step of synchronization of said **incoming audio signal,** the steps of:
- Processing, by said playback control means (PCM), said **incoming audio signal (106)** received from at least one remote client device of said second subset of remote client devices (300₁, 300₂), to obtain an enhanced incoming audio signal.

11. A method for managing multimedia signals in a virtual conferencing system according to claim 1, 3 and 4, wherein said method further comprises the steps of:
- transcribing, by an Audio Transcription Means (ATM), said **outgoing audio signal (105₁, 105₃)** received from each of said at least one active client device of said first subset of co-located client devices (100₁,100₂, 100₃) and/or said **outgoing audio signal (305)**-of at least one remote client device of said second subset of remote client devices (300₁, 300₂), to obtain a transcription associated to an audio signal of said client devices coupled to said virtual conferencing server (10).

12. A multimedia management system (1) for managing multimedia signals in a virtual conferencing system comprising a virtual conference server (10) and a plurality of client devices, each coupled to said virtual conference server (10), said plurality of client devices comprising a first subset of co-located client devices (100₁,100₂, 100₃) and a second subset of remote devices (300₁, 300₂), **CHARACTERIZED IN THAT** said acoustic management system further comprises a multimedia management means (MMM) configured to:
- detect at least one active client device from said first subset of co-located client devices (100₁,100₂, 100₃) based on a measured input signal associated to a user of each said co-located client device and/or other distinctive attributes extracted from at least one sensor coupled to each said co-located client device; and
- Control to acquire an outgoing audio signal exclusively from each of said at least one active co-located device. for forwarding said outgoing audio signal to remote devices of said second subset of remote devices (300₁, 300₂).

13. A multimedia management system (1) according to claim 11
wherein said multimedia management means (MMM) further is configured to:
- control synchronization of a received incoming audio signal from at least one remote client device of said second subset of remote client devices (300₁, 300₂), at at least one active co-located client device, for playback at co-located client devices of said first subset of co-located client devices (100₁,100₂, 100₃).

14. A multimedia management module (MMM) for use in a virtual conferencing system (1) comprising a virtual conference server (10) and a plurality of client devices coupled to said virtual conference server, said plurality of client devices comprising a first subset of co-located client devices (100₁,100₂, 100₃) and a second subset of remote devices (300₁, 300₂), **CHARACTERIZED IN THAT** said multimedia management module (MMM) comprises:
- Active client detection means (ACDM), configured to detect at least one active client device of said first subset of co-located client devices based on a measured input signal associated to a user of each said co-located client device and/or other distinctive attributes extracted from at least one sensor coupled to each said co-located client device; and/or
- Acquisition control means (ACM), configured to control an acquisition of an outgoing audio signal exclusively from each of said at least one active co-located device for forwarding said outgoing audio signal to remote devices of said second subset of remote devices (300₁, 300₂); and/or
- A playback control means (PCM), configured to control, synchronization of a received incoming audio signal (106) at co-located client devices for playback at co-located client devices of said first subset of co-located client devices (100₁,100₂, 100₃), and/or
- A multimedia routing means (MRM) that is configured to mix the audio signals for playback at co-located client device (100₁, 100₂, 100₃), or to mix the audio signals from each of said at least one active co-located device for playback at remote client devices (300₁, 300₂).
- An audio transcription means (ATM) that is configured to transcribe the audio from outgoing audio signals 105₁, 105₂, 105₃ of active co-located client devices, in addition from audio signals of the remote client devices 300₁, 300₂; and /or
- A multimedia management module (MMM) that is configured to detect at least one co-located client device from said plurality of client devices based on acoustic signals and/or a discovery query exchanged between client devices of said plurality of client devices.

15. Virtual conference server (10) for use in a virtual conferencing system, wherein said virtual conference server (10) comprises a multimedia management module (MMM) (11) according to claim 14.
